# EUROPÄISCHE PATENTSCHRIFT

(11) **EP 0 491 011 B1**
(45) Veröffentlichungstag und Bekanntmachung des Hinweises auf die Patenterteilung: **11.01.1995**
(21) Anmeldenummer: 91908659.5
(22) Anmeldetag: 02.05.1991
(51) Int. Cl.: A47C 7/74, B60N 2/00

(54) **FAHRZEUGSITZ MIT ELEKTRISCHER BEHEIZUNG**
VEHICLE SEAT WITH ELECTRIC HEATING
SIEGE DE VEHICULE AVEC CHAUFFAGE ELECTRIQUE

(30) Priorität: 03.05.1990 DE 4014178
(43) Veröffentlichungstag der Anmeldung: 24.06.1992
(73) Patentinhaber: I.G. Bauerhin GmbH elektro-technische Fabrik, D-63584 Gründau (DE)
(72) Erfinder: HILMER, Josef, D-6466 Gründau 2 (DE)
(74) Vertreter: Zwergel, Wilhelm
(86) Internationale Anmeldenummer: EP9100838
(87) Internationale Veröffentlichungsnummer: WO9116841

(56) Entgegenhaltungen:
- EP-A- 143 742
- EP-A- 302 281
- US-A- 4 865 379

## Beschreibung

Die Erfindung betrifft einen Fahrzeugsitz gemäß dem Oberbegriff des Anspruchs 1.

Ein derartiger Sitz ist aus der EP-A-143 742 bekannt.

Zwischen zwei seitlichen Verstärkungen ist ein Ausschnitt in quadratischer oder rechteckiger Form vorgesehen, in den eine mehrlagige Einheit einsetzbar ist, die aus einem Heizkörper besteht, der zwischen zwei Folien aus "Mylar" eingeklebt ist und auf der eine Folie aus Polyäthylen aufgebracht ist, die ihrerseits bedeckt ist von einer Lage aus Polyurethanschaumstoff.

Aus Gründen der Gewichtsersparnis (und daraus resultierender Treibstoffersparnis eines Fahrzeugs), wird ein Sitz mit einem Sitzkörper aus Schaumstoff im Kalt- oder Heißschäumverfahren hergestellt.
Zur Komforterhöhung ist eine elektrische Beheizung an der Sitz- und/oder Lehnenfläche eines solchen Sitzes wünschenswert.
Für die Fahrzeughersteller ist es wichtig, daß sich eine besondere Ausstattung - hier mit elektrischem Heizelement - möglichst reibungslos in ihren Fertigungsablauf (wie Fließband oder Taktverfahren) eingliedern läßt. Dabei ist außerdem zu berücksichtigen, daß eine vielzahl von Kundenwünschen nicht nur bezüglich der Sitze, sondern auch bei der Farbe, Form und dem Material der Sitze vorliegen, je nach sonstiger Ausführung und Ausstattung (innen) des Fahrzeuges, wie PKW, und in Abstimmung hierzu.

Gegenwärtig werden nach dem Stand der Technik elektrisch beheizbare Sitze durch Einbringen einer Heizleiterzwischenlage zwischen verklebten oder verschweißten Folien mit außenseitigem Bezugsstoff hergestellt (vgl. EP-A-331 762).

Eine Heizleiterzwischenlage erfordert einen hohen Arbeitsaufwand, und bereitet Schwierigkeiten beim Fertigungsprozeß, wenn alle Kundenwünsche berücksichtigt werden sollen.

Besonders hinsichtlich des Sitzbezugs besteht die Gefahr des Verrutschens in der Form zum Schäumen. Folien oder andere Kunststoff-Zwischenlagen können die Gasdurchlässigkeit beeinträchtigen. Mehrlagige Träger erfordern besonderen Fixierungsaufwand und beeinträchtigen den Wärmefluß des Heizelementes.

Aufgabe der Erfindung ist es einen Fahrzeugsitz der eingangs genannten Art zu schaffen, bei dem ohne Beeinträchtigung des Wärme durchflusses und der gas durchlässigkeit ein günstig einbanhares Heizelement geschaffen wird.

Die Lösung der Erfindung erfolgt mit den im kennzeichnenden Teil des Anspruchs 1 angegebenen Merkmalen.

Die wesentlichsten Vorteile dieser Lösung sind:
Dadurch, daß der Heizleiter keine Zwischenlage mehr bildet zwischen anderen Lagen, insbesondere aus Kunststoffen, reduziert sich der Aufwand erheblich. Eine Beeinträchtigung des Wärmeabflusses, der Dicke des Heizelementes, der Gasdurchlässigkeit, der Sitzkontur usw., wie bisher, entfällt bei der neuen Lösung. Trotzdem lassen sich sowohl die Forderung des Fahrzeughersteller bezüglich Integrationsfähigkeit in den Fertigungsablauf als auch Kundenwünsche hinsichtlich der Ausstattung und ihrer Anpassung leicht berücksichtigen.

Ausbildungen und Weiterbildungen der Erfindung sind Gegenstand der abhängigen Ansprüche 2 bis 8. Der Beschreibung und Zeichnung sind ein Ausführungsbeispiels ebenso wie weitere Vorteile zu entnehmen.

In der Zeichnung ist rein beispielweise dargestellt:
- FIG 1: ein Schnitt- Schaumstoff mit daran befestigtem Heizleiter von der Befestigungsseite (Unterseite) gesehen
- FIG 1a: den Schnitt- Schaumstoff mit Kantenbereich
- FIG 1b: ein Befestigungsfolienteil (perforiert)
- FIG 1c: ein Befestigungsgewebe oder -netz
- FIG 2: einen Schnitt durch den Schaumstoffkern/Sitzkörper mit angebrachtem Heizelement
- FIG 3: einen Teil (Hälfte) der Negativform für das Schäumen mit eingebrachtem Heizelement
- FIG 4: eine Ansicht des fertigen Sitzes (teilweise) mit Heizelement strichliert angedeutet.

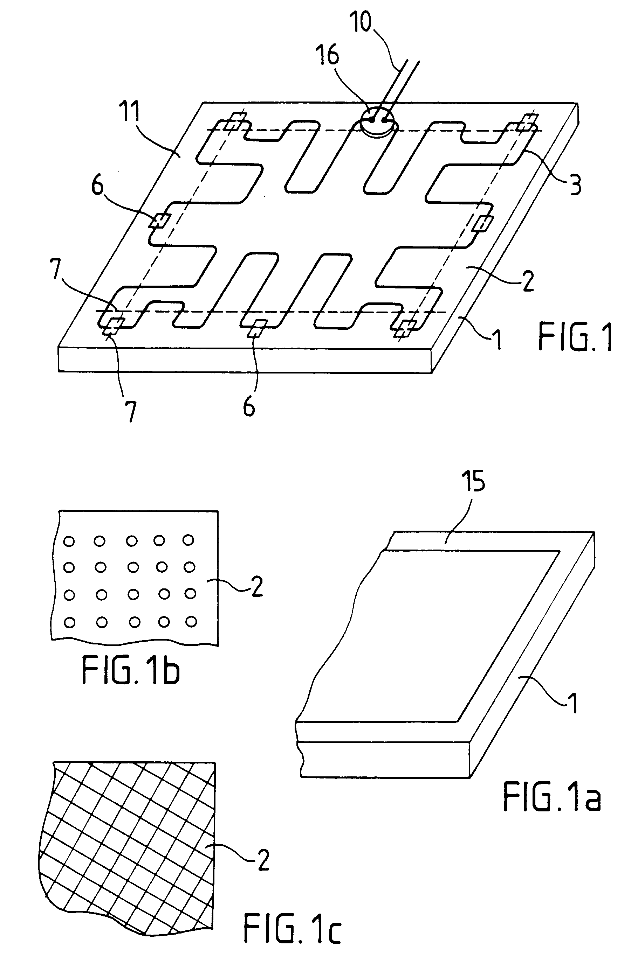

Wie FIG 1 zeigt, wird bei einem Ausführungsbeispiel der Erfindung ein Schaumstoff Schnittstück 1 aus einer größeren Platte oder Rolle abgeschnitten in der Größe und Form der zu beheizenden Fläche an der Sitz- und/oder Lehnenfläche. Mit einer Folie oder einem Gewebe oder Netz 2 wird der Heizleiter 3 an dem Schnitt- Schaumstoff- Stück 1 mäanderförmig befestigt für gleichmäßige Wärmeverteilung über die Fläche 5.

Diese Befestigung kann punktuell, bereichsweise, linien- oder streifenförmig oder flächenhaft erfolgen, bis hin zu einer die Gesamtfläche des Schaumstoff-stückes 1 bedeckenden Folie (perforiert) nach FIG 1b oder einem ebenso großen Gewebe oder Netz oder ähnlichem Stoff nach FIG 1c.

Zur Befestigung der Folie oder des Gewebes 2 am Stück 1 wird die Anwendung von Druck und/oder Wärme bevorzugt. Ein Adhäsionskleber als Beschichtung (auf 1 und/oder 2), oder als Klebestreifen oder -flecken ist geeignet. Auch Annähen, Anschweißen oder ähnliches punktuell oder in Nahtform ist geeignet bei 6 und 7.

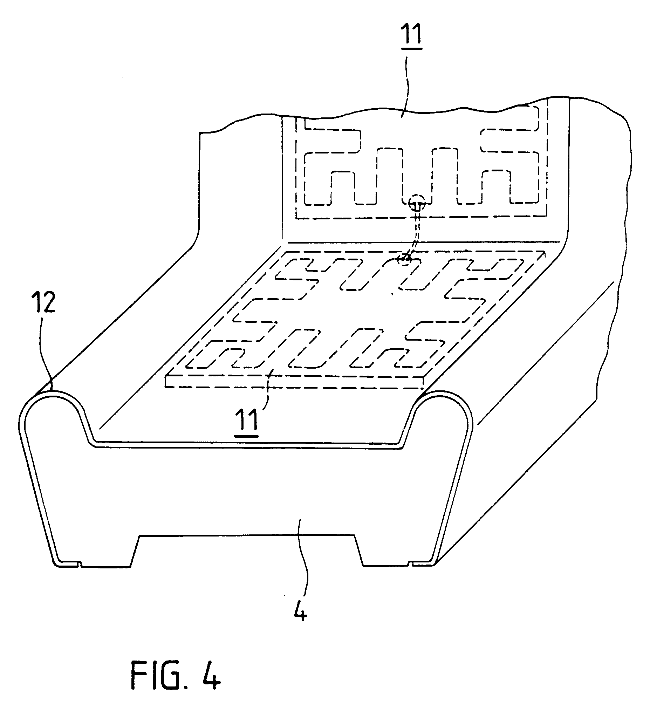

Mit 4 ist der Sitzköper/-kern bezeichnet. Er besteht aus einem Polyurethanschaum (PUR) und wird unter Druck im Kalt- oder Heißschäumverfahren in eine Negativform 8 (Hälfte s. FIG 4 ) eingeschäumt.

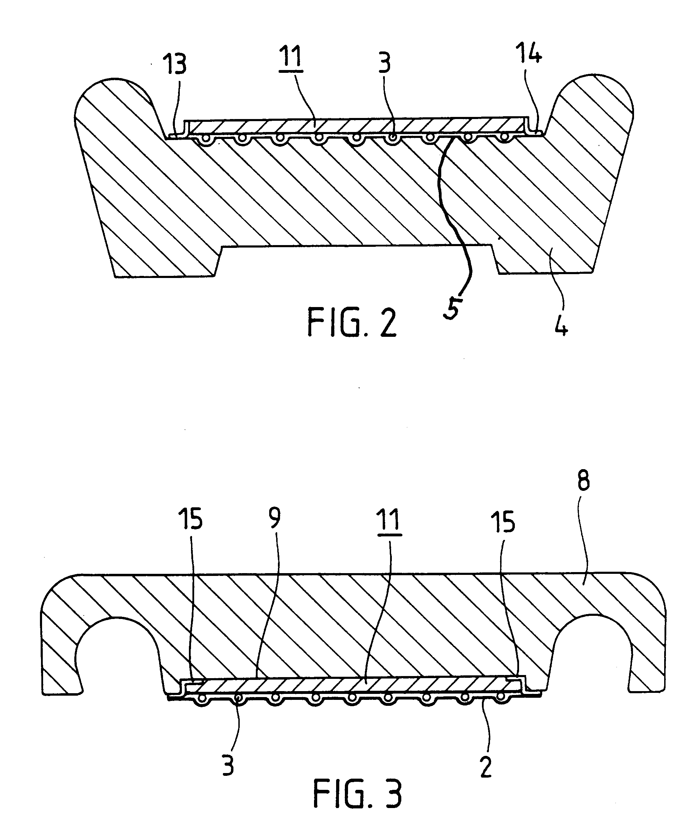

Das Heizelement 11 nach FIG 1 wird nach FIG 2 an einem bereits geschäumten Teil des Sitzkörpers angebracht, z. B. an der Oberfläche des Schaumstoff-Kerns 4 in einem später zu beheizenden Flächen-Bereich 5 für Sitz und/oder Lehne durch formschlüssiges Einlegen des erhabenen Heizleiters 3 in korrespondierenden Nuten an der besagten Oberfläche.

Hierbei könnte die Befestigungsfolie oder das Gewebe 2 (auch) außen Kleber-beschichtet sein und/oder auf andere Weise, wie mittels Druck und Wärme, oder mit anderen Befestigungsmitteln wie Klebestreifen, (auch beidseitig und mit vor Gebrauch abziehbarer Schutzfolie) Naht- oder Klammermitteln.

Da der Bezug 12 erst bei der endgültigen Fertigstellung des Sitzes zum Abschluß über dem Heizelement 11 aufgebracht wird, können auch Klebestreifen 13, 14 oder -flecken verbleiben, da diese abgedeckt werden.

Gleiches gilt für die dünnen geschlossenen Klebebänder 15 oder -streifen, die der Kantenversiegelung des Stückes 1 aus offenporigem Schaumstoff dienen, bevor das Heizelement 11 in eine entsprechende Ausnehmung 9 der Negativform 8 vor dem Einschäumen ein - oder aufgebracht wird - siehe FIG 3.

Die Befestigung darin kann allein formschlüssig erfolgen, aber auch nach einer der zu FIG 2 beschriebenen Methoden bzw. Mittel. Das Heizelement 11 könnte aber auch (formschlüssig), nach außen abgedichtet, wie ein Formkern, lediglich eine Einlage bilden.

In jedem Falle ist das Heizelement 11 ausreichend fest positioniert ohne Verrutschen und nicht auftragend (in der Dicke) gegenüber dem normalen Sitzkörper/ -kern (ohne Heizelement) und somit im Endzustand (fertiger Sitz) nicht mehr auffallend weil in der Oberfläche des des Kerns 4 integriert.

Der Schaumstoff für das Stück 1 sollte gleiche oder ähnliche Charakteristika haben, wie derjenige des Sitzkörpers/ -kerns 4. Geschnitten - wie FIG 1 - sieht man seine offenen Poren. Der Grad der Offenporigkeit (wählbar) bestimmt auch den Grad an gewünschter Elastizität. Die Oberflächenrauhheit, die Abriebfestigkeit, die Stauchhärte, die Farbe und dergleichen des Stückes 1 sollten dem des Teils 4 möglichst nahekommen.

An einer rauhen Oberfläche eines Schaumstoffes hält der Bezugsstoff 12 - siehe FIG 4 - besser. Bewegungen einer auf dem fertigen Sitz sitzenden Person dürfen keinen großen Abrieb geben und unter dem Gewicht einer solchen Person sollte der Schaumstoff nur wenig eindrückbar, also stauchfest sein.

Kanten des Schaumstoffs dürfen sich nicht verhärten, weshalb die geschlossenen Streifen 15 (FIG 1 und 3) dieselben an Stück 1 vor dem Einschäumen abdecken.

Im Schaumstoff ist vorzugsweise noch eine entsprechende Ausnehmung vorzusehen für den Temperaturregler oder Thermostat oder Temperaturbegrenzer 10 der Zusammen mit einer Zugentlastung für das Anschlußkabel 16 und dem Heizleiter aus Widerstandsmaterial - ummantelt mit PTFE (Teflon) oder ähnliches - auf dem Stück 1 befestigt wird. Das Anschlußkabel wird mit dem Bordnetz (Stromversorgung) des Fahrzeuges verbunden. Die Einschaltung des Heizelementes 11 kann willentlich vom Amaturenbrett z. B. eines Kraftwagens wie PKW vorgenommen werden.

Der Bezugsstoff 12 wird von dem Kunden nach Farbe, Muster und dergleichen angepaßt, an die sonstige Innenausstattung des Fahrzeugs, und kann bei der Erfindung trotz Serienfertigung eines Fahrzeugs am Fließband individuell berücksichtigt werden, weil er erst am Schluß aufgebracht wird. Er kann innenseitig aufgerauht, bzw. mit einem rauhen Stoff kaschiert sein.

## Patentansprüche

1. Fahrzeugsitz mit elektrischer Beheizung,
der einen Sitzkörper(4) aus Schaumstoff aufweist, wobei ein, einen elektrischen Heizleiter(3) sowie ein Schnittstück (1) aus Schaumstoff aufweisendes Heizelement (11) in den Sitzkörper eingelegt ist,
dadurch gekennzeichnet, daß
der elektrische Heizleiter(3) an dem gasdurchlässig ausgebildeten Schnittstück (1) derart direkt befestigt ist,daß er auf der Oberfläche(5) des Sitzkörpers(4) unmittelbar aufliegt, wobei
das Schnittstück(1) allein den Träger für den elektrischen Heizleiter(3) bildet.

2. Sitz nach Anspruch 1, dadurch gekennzeichnet, daß das Schnittstück(1) aus Schaumstoff gleiche oder ähnliche Charakteristika aufweist wie der Schaumstoff des Sitzkörpers(4).

3. Sitz nach einem der vorhergehenden Ansprüche, dadurch gekennzeichnet, daß der Heizleiter(3) an dem Schnittstück(1) unter Anwendung von Druck und/oder Wärme befestigt ist.

4. Sitz nach einem der vorhergehenden Ansprüche, dadurch gekennzeichnet, daß der Heizleiter(3) punktuell, bereichsweise wie linien- oder streifenförmig oder flächenhaft mit einem insbesondere gasdurchlässigen Stoff, wie perforierte Folie, Netz oder Gewebe (2), an dem Schnittstück(1) aus Schaumstoff befestigt ist.

5. Sitz nach einem der vorhergehenden Ansprüche, dadurch gekennzeichnet, daß der Heizleiter(3) an dem Schnittstück (1) aus Schaumstoff so befestigt ist, daß sein Zuleitungskabel (16) mit Temperaturregler (10), Thermostat oder -begrenzer zugentlastet herausragend für den Anschluß befestigt ist.

6. Sitz nach Anspruch 5, dadurch gekennzeichnet, daß für den Temperaturregler (10) mit zugentlastetem Kabel (16) eine Ausnehmung im Schnittstück (1) vorhanden ist.

7. Sitz nach einem der vorhergehenden Ansprüche, dadurch gekennzeichnet, daß bei dem Schnittstück (1) im Bereich seiner Außenränder eine Versiegelung durch ein geschlossenes Band bzw. einen Streifen (13,14,15), insbesondere Klebestreifen, erfolgt.

8. Sitz nach einem der vorhergehenden Ansprüche, dadurch gekennzeichnet, daß
das Schnittstück (1) auf der dem Bezugsstoff (12) zugekehrten Seite aufgerauht ist.

## Claims

1. A vehicle seat with electrical heating which comprises a seat body (4) made of foamed material, wherein a heating element (11) comprising an electrical heating conductor (3) and a cut piece (1) made of foamed material is inserted in the seat body, characterised in that the electrical heating conductor (3) is directly attached to the cut piece (1) of gas-permeable construction in such a way that it rests directly on the surface (5) of the seat body (4), wherein the cut piece (1) alone forms the support for the electrical heating conductor (3).

2. A seat according to claim 1, characterised in that the cut piece (1) made of foamed material has the same or similar characteristics as the foamed material of the seat body (4).

3. A seat according to either one of the preceding claims, characterised in that the heating conductor (3) is attached to the cut piece (1) with the use of pressure and/or heat.

4. A seat according to any one of the preceding claims, characterised in that the heating conductor (3) is attached to the cut piece (1) made of foamed material at points, regionally as in the form of strips or lines, or over its surface, particularly with a gas-permeable material such as perforated foil, netting or fabric (2).

5. A seat according to any one of the preceding claims, characterised in that the heating conductor (3) is attached to the cut piece (1) made of foamed material so that its supply cable (16) is secured clamped and protruding for connection to a temperature regulator (10), thermostat or temperature limiter.

6. A seat according to claim 5, characterised in that a recess in the cut piece (1) is present for the temperature regulator (10) with the clamped cable (16).

7. A seat according to any one of the preceding claims, characterised in that a seal is effected for the cut piece (1) in the region of its outer edges by a closed tape or a strip (13, 14, 15), particularly an adhesive strip.

8. A seat according to any one of the preceding claims, characterised in that the cut piece (1) is roughened on its side facing the covering material (12).

## Revendications

1. Siège de véhicule à chauffage électrique comportant un corps de siège (4) en produit alvéolaire, un élément chauffant (11) qui comprend une résistance de chauffage (3) électrique et une pièce découpée (1) en produit alvéolaire étant inséré dans le corps de siège, caractérisé par le fait que la résistance de chauffage (3) électrique est fixée directement sur la pièce découpée (1) perméable au gaz, de manière telle qu'elle porte directement sur la surface (5) du corps de sièges (4), la pièce découpée (1) constituant à elle seule le support pour la résistance de chauffage (3) électrique.

2. Siège selon la revendication 1, caractérisé par le fait que la pièce découpée (1) en produit alvéolaire présente des caractéristiques identiques ou similaires à celles du produit alvéolaire du corps de siège (4).

3. Siège selon l'une des revendications précédentes. cacactérisé par le fait que la résistance de chauffage (3) est fixée sur la pièce découpée (1) par pression et/ou par apport de chaleur.

4. Siège selon l'une des revendications précédentes, caractérisé par le fait que la résistance de chauffage (3) est fixée sur la pièce découpée (1) en produit alvéolaire de manière ponctuelle, par des zones telles que des lignes ou des bandes ou est tenue sur une grande surface au moyen d'un matériau de préférence perméable au gaz, tel qu'un film perforé, un filet ou un tissu (2).

5. Siège selon l'une des revendications précédentes, caractérisé par le fait que la résistance de chauffage (3) est fixée sur la pièce découpée (1) en produit alvéolaire de manière telle que son câble d'alimentation (16) pourvu d'un élément de réglage de température (10), d'un thermostat ou d'un limiteur de température sorte à des fins de connexion en étant déchargé de la traction.

6. Siège selon la revendication 5, caractérise par le fait qu'il est prévu dans la pièce découpée (1) un évidement pour l'élément de réglage de température (10) pourvu de son câble déchargé de la traction.

7. Siège selon l'une des revendications précédentes, caractérisé par le fait que la région des bords extérieurs de la pièce découpée (1) est scellée au moyen d'une bande fermée ou d'un ruban (13, 14, 15), en particulier d'une bande adhésive.

8. Siège selon l'une des revendications précédentes, caractérisé par le fait que la face de la pièce découpée (1) tournée vers le matériau de revêtement (12) est rugueuse.
